# EUROPÄISCHE PATENTSCHRIFT

(11) **EP 2 439 052 B1**
(45) Veröffentlichungstag und Bekanntmachung des Hinweises auf die Patenterteilung: **13.04.2016**
(21) Anmeldenummer: 11006520.8
(22) Anmeldetag: 08.08.2011
(51) Int. Cl.: B29C 65/00, B23C 3/12, B23B 5/16, B23C 1/20

(54) **Schälgerät**
Peeling tool
Appareil d'écroutage

(30) Priorität: 07.10.2010 DE 102010047859
(43) Veröffentlichungstag der Anmeldung: 11.04.2012
(73) Patentinhaber: PF Schweisstechnologie GmbH, 36304 Alsfeld (DE)
(72) Erfinder: Merle, Bernd, 36304 Alsfeld (DE)
(74) Vertreter: Eisenführ Speiser

(56) Entgegenhaltungen:
- DE-A1-102008 018 079
- DE-U1- 20 009 934
- JP-A- 60 238 210
- US-A1- 2003 039 517
- US-A1- 2003 077 130

## Beschreibung

Die vorliegende Erfindung betrifft ein Schälgerät zum zumindest teilweisen Abtragen der Außenumfangsoberfläche von rotationssymmetrischen Gegenständen, insbesondere zylindrischen Kunststoffrohren, gemäß dem Oberbegriff des Anspruchs 1. Ein solches Schälgerät ist aus US 2003/0077130 A bekannt.

Insbesondere betrifft die vorliegende Erfindung ein Schälgerät zum zumindest teilweisen Abtragen der Außenumfangsoberfläche von rotationssymmetrischen Gegenständen, insbesondere zylindrischen Kunststoffrohren, enthaltend einen Schälkopf mit einer eine Mittellängsachse aufweisenden Antriebswelle, mit einer drehfest auf der Antriebswelle und koaxial zu dieser angeordneten zylindrischen Messerwalze, sowie mit wenigstens einer in der Messerwalze angeordneten Schälklinge die eine aus der Messerwalzenoberfläche heraus ragende und den maximalen Außendurchmesser des Schälkopfes bildende, lineare Schneidkante aufweist und die zumindest annähernd parallel zur Mittellängsachse der Messerwalze ausgerichtet ist.

In der Praxis ist es bekannt, rotationssymmetrische Gegenstände, wie beispielsweise zylindrische Kunststoffrohre, die an ihren Enden miteinander oder mit anderen Formteilen, wie T- oder Kreuzstücke, beispielsweise über Heizwendelfittinge im Wege einer Heizwendelverschweißung verbunden werden sollen, einer speziellen Behandlung zu unterziehen, um eine sichere und/oder mediendichte Verbindung zu erzielen. In solchen Kunststoffrohren können beispielsweise Medien, wie Wasser oder Gase transportiert werden. Um ein entsprechendes Transportnetz herzustellen, werden eine Vielzahl von Kunststoffrohren miteinander, z.B. über Muffen, oder mit Formstücken durch Verschweißen oder Verkleben verbunden.

Weiterhin ist aus der Praxis bekannt, Abzweige für bspw. Zu- oder Abläufe in bereits bestehende Rohrleitungen durch Aufsetzen von s.g. Sattelstücken auf ein Rohr zu schaffen. Auch in diesen Fällen muss die Rohroberfläche, auf der das Sattelstück bspw. aufgeschweißt oder geklebt werden soll, vorbehandelt werden. Neben der Reinigung der Oberfläche ist es besonders wichtig, die auf der Rohroberfläche befindliche Oxidschicht zu entfernen und eine ebene Fläche zu schaffen, die frei von Kratzern und Riefen ist, da diese die Schweiß- oder Klebequalität und damit die Haltbarkeit und Dichtigkeit der Verbindungsnaht negativ beeinflussen.

Da Sattelstücke üblicherweise nicht am Rohranfang aufgesetzt werden, sondern von diesem entfernt auf der Rohroberfläche, sind Schälgeräte, wie die aus dem DE-Gebrauchsmuster 296 12 668 bekannte Schälglocke, hier ungeeignet. Andere bekannte Schälgeräte, die an einer beliebigen Stelle eines Rohrs auf dieses aufsetzbar sind, sind dazu vorgesehen, eine Schicht Rohrmaterial über den gesamten Rohrumfang von dem Rohr abzutragen.

Ein solches Schälgerät ist in dem DE-Patent 100 27 316 offenbart. Hier sind Rollen zu einer Laufschale zusammengefasst, in die das zu schälende Rohr eingelegt wird. Der Laufschale gegenüber ist ein Schälmesser angeordnet, das entlang einer Spindel manuell auf das in der Laufschale liegende Rohr zubewegt werden kann. Liegt das Schälmesser an dem Rohr an, wird das Schälgerät um die Längsachse des Rohrs gedreht.

Schälgeräte, wie das Vorgenannte, eignen sich jedoch nur bedingt zur Vorbereitung eines Rohres zum Aufsetzen eines Sattelstücks, da mit diesen der gesamte Rohrumfang bearbeitet wird. Dies ist einerseits unnötig, da ein Sattelstück maximal auf dem halben Rohrumfang aufliegt. Andererseits schwächt ein vollumfänglicher Materialabtrag die Festigkeit und damit die Haltbarkeit des Rohrs an der bearbeiteten Stelle. Zudem ist es bei dieser Art Schälgerät notwendig das Rohr vollumfänglich freizulegen, da die Laufschale auf dem Schälmesser der gegenüberliegenden Seite des Rohres angeordnet ist. Eine vollumfängliche Freilegung des Rohres ist aber auf Baustellen überlicherweise nicht möglich oder sinnvoll.

Es ist daher Aufgabe der vorliegenden Erfindung, ein Schälgerät zur Verfügung zu stellen, das die vorstehend genannten Nachteile überwindet und ein effektives sowie sicheres Anbringen von insbesondere Sattelstücken an Rohroberflächen ermöglicht.

Die vorstehende Aufgabe wird durch die Merkmale des Anspruchs 1 gelöst. In den sich daran anschließenden Ansprüchen 2 bis 11 finden sich vorteilhafte Ausgestaltungen hierzu.

Im Besonderen wird die vorstehend genannte Aufgabe durch ein Schälgerät zum zumindest teilweisen Abtragen der Außenumfangsoberfläche von rotationssymmetrischen Gegenständen, insbesondere zylindrischen Kunststoffrohren, enthaltend einen Schälkopf mit einer eine Mittellängsachse aufweisenden Antriebswelle, mit einer drehfest auf der Antriebswelle und koaxial zu dieser angeordneten zylindrischen Messerwalze, sowie mit wenigstens einer in der Messerwalze angeordneten Schälklinge die eine aus der Messerwalzenoberfläche heraus ragende und den maximalen Außendurchmesser des Schälkopfes bildende, Schneidkante aufweist.

In dem erfindungsgemäßen Schälgeräts sind zwei zylindrische und Mittellängsachsen aufweisende Führungselemente vorgesehen, die an den Stirnseiten der Messerwalze koaxial zu dieser angeordnet sind. Diese erlauben eine exakte Führung des Schälgeräts entlang der zu bearbeitenden Stelle des Rohrs.

Erfindungsgemäß ist weiterhin vorgesehen, dass das erste Führungselement einen Durchmesser aufweist, der dem maximalen Aussendurchmesser des Schälkopfes entspricht und das zweite Führungselement einen gegenüber dem ersten Führungselement reduzierten Durchmesser aufweist, wobei in einer bevorzugten Ausführung der Durchmesserunterschied zwischen dem ersten und dem zweiten Führungselement dem Doppelten des von der Außenumfangsoberfläche der rotationssymmetrischen Gegenständen zu erzielenden Materialabtrags oder der Schältiefe entspricht. Bei dieser Gestaltung der Führungselemente liegt das zweite Führungselement auf der ungeschälten Rohroberfläche auf, während das erste Führungselement auf der bereits geschälten Fläche aufliegt. Durch diese Anordnung wird die Schneidkante der Schälklinge stets parallel zur Rohroberfläche bzw. zur Mittellängsachse des Rohrs geführt, wodurch ein stets gleichbleibender Materialabtrag über die gesamte unbearbeitete Bearbeitungsfläche erzielt wird.

Um eine reibungsfreie und damit noch genauere Führung des Schälgerätes zu ermöglichen ist erfindungsgemäß vorgesehen, dass das erste und das zweite Führungselement von der Messerwalze unabhängig um ihre Mittellängsachse drehbar gelagert sind, wodurch die Führungselemente auf der Rohroberfläche abrollen können. Dieses Abrollen kann dadurch gewährleistet werden, dass das erste und das zweite Führungselement auf der Antriebswelle drehbar gelagert sind.

Da die Führungselemente die Messerwalze auf beiden Seiten stabil abstützen, kann die Breite der Führungselemente geringer sein als die Breite der Messerwalze. Hierdurch erhöht sich auch die effektive Arbeitsbreite des Schälgeräts.

Vorteilhafter Weise bestehen die Führungselemente und die Messerwalze aus Metall, wodurch sich deren Verschleiß minimiert und die Stabilität des Schälgerätes erhöht.

Zur Gewährleistung des Arbeitsschutzes ist weiterhin vorgesehen, dass eine parallel zur Messerwalzenoberfläche ausgerichtete Abdeckung vorgesehen ist, die die Messerwalze und die Führungselemente in axialer Richtung zumindest annähernd komplett abdeckt und sich in Umfangsrichtung zumindest über einen Abschnitt erstreckt. Eine solche Abdeckung schützt den Bediener des Schälgeräts vor den vom Schälgerät weggeschleuderten Spänen und verhindert ein unbeabsichtigtes Berühren der rotierenden Messerwalze. Die Abdeckung kann weiterhin in Umfangsrichtung verstellbar sein, um den Arbeitsbereich ergonomisch z.B. an unterschiedliche Bediener oder Arbeitssituationen anpassen zu können.

In einer vorteilhaften Ausgestaltung des erfindungsgemäßen Schälgeräts ist weiterhin vorgesehen, dass die Antriebswelle ein erstes Ende mit einem Adapter zum Anschluss eines Antriebs aufweist. Mittels dieses Adapters können beliebige Antriebe, bspw. bereits vorhandene Antriebe mit dem Schälgerät verbunden werden.

Als Antrieb ist besonders ein Elektromotor geeignet. Alternativ können auch Elektrogeräte, wie ein Winkelschleifer oder eine Bohrmaschine verwendet werden.

In einer weiterhin vorteilhaften Ausgestaltung weist die Antriebswelle ein zweites Ende auf, an dem ein Lagerelement vorgesehen ist, in dem das zweite Ende der Antriebswelle drehbar gelagert ist.

Um ein Mitdrehen des Lagerelements im Betrieb zu verhindern ist vorteilhaft vorgesehen, dass das Lagerelement eine Drehmomentabstützung aufweist, mittels der dieses an einem Rahmenteil des Antriebs fixierbar ist. Die Drehmomentabstützung kann darüberhinaus ebenfalls als Griff fungieren.

Zur besseren Handhabung des Schälgeräts kann weiterhin vorteilhaft vorgesehen sein, dass das Lagerelement einen Haltegriff aufweist. Dieser kann ebenfalls als Orientierung zur axialen Ausrichtung des Schälgeräts zum Rohr dienen.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische Ansicht eines Ausführungsbeispiels des erfindungsgemäßen Schälgeräts;
- Fig. 2:: eine Schnittdarstellung in einer Ebene entlang der Mittellängsachse der Antriebswelle des Ausführungsbeispiels gemäß Fig. 1;
- Fig. 3:: eine Schnittdarstellung des Schälkopfes in der Schnittebene entsprechend Fig. 2; und
- Fig. 4:: ein Detail der Darstellung der Fig. 3.

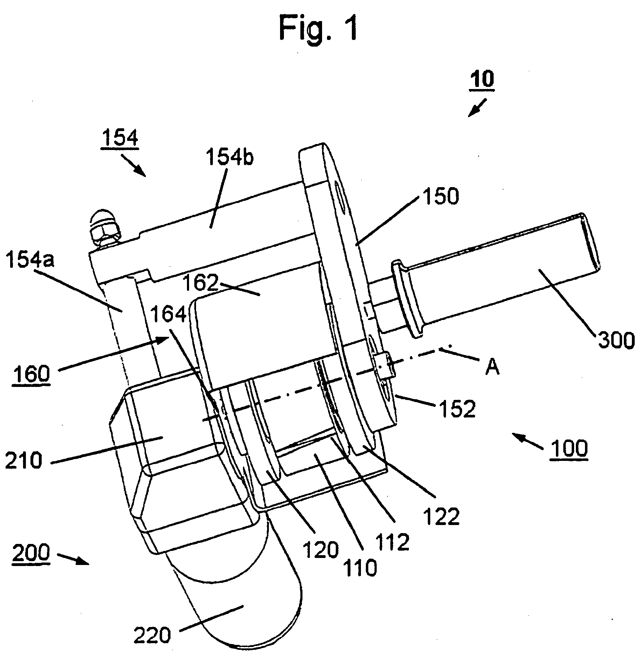

Fig. 1 zeigt eine perspektivische Ansicht eines Ausführungsbeispiels des erfindungsgemäßen Schälgeräts 10 mit einem Schälkopf 100 und einem Antrieb 200.

Wie weiterhin in Fig. 1 zu sehen ist, weist der Schälkopf 100 eine Messerwalze 110 mit darin angeordneten Schälklingen 112 auf, von denen in Fig. 1 nur eine zu sehen ist. Links und rechts der Messerwalze 110 sind zylindrische Führungselemente 120, 122 angeordnet. Die Führungselemente 120, 122 sind mit ihren Stirnflächen parallel und mit einem Abstand zu den Stirnflächen der Messerwalze 110 sowie koaxial zu dieser ausgerichtet. Die Messerwalze 110 und die Führungselemente 120, 122 sind auf einer in Fig. 1 nicht sichtbaren Antriebswelle 130 angebracht, die mit ihrem ersten, in Fig. 1 linken Ende 132 mittels eines ebenfalls in Fig. 1 nicht sichtbaren Adapters 140 mit dem Antrieb 200 verbunden ist. Das zweite Ende 134 der Antriebswelle 130 ist in einem Lagerelement 150 in einem Lager 152 drehbar gelagert.

Der Antrieb 200 weist ein in einem Gehäuseteil 210 aufgenommenes Winkelgetriebe auf, an dessen Abtrieb der Adapter 140 befestigt ist. An die Antriebsseite des Winkelgetriebes, bzw. an die antriebsseitige Fläche des Gehäuseteils 210 ist eine Antriebseinheit 220, hier ein Elektromotor, angeflanscht.

Eine Drehmomentabstützung 154 weist einen mit dem Gehäuseteil 210 des Antriebs 200 verbundenen vertikalen Bolzen 154a sowie einen parallel zur Antriebswelle 130 ausgerichteten Verbindungssteg 154b auf, der mit einem Ende an dem Lagerelement 150 befestigt ist und mit dem anderen Ende mit dem vertikalen Bolzen 154a verbunden ist.

Ein Griff 300 von annähernd zylindrischer Form ist so an der vom Schälkopf 10 weg weisenden Seite des Lagerelements 150 angebracht, dass er parallel zur Antriebswelle 130 ausgerichtet ist.

Eine Abdeckung 160 weist einen ebenen, sich um die Messerwalze herum und parallel zu dieser erstreckenden ersten Abschnitt 162 sowie einen zwischen dem Führungselement 120 und dem Gehäuseteil 210 angeordneten zweiten Abschnitt 164 auf. Der Abschnitt 162 der Abdeckung 160 bedeckt etwa 2/3 der Oberfläche der Messerwalze 110, d.h. einen Kreissektor von ca. 240°. Der freibleibende Sektor der Messerwalze110 bildet den Arbeitsbereich des Schälgeräts 10.

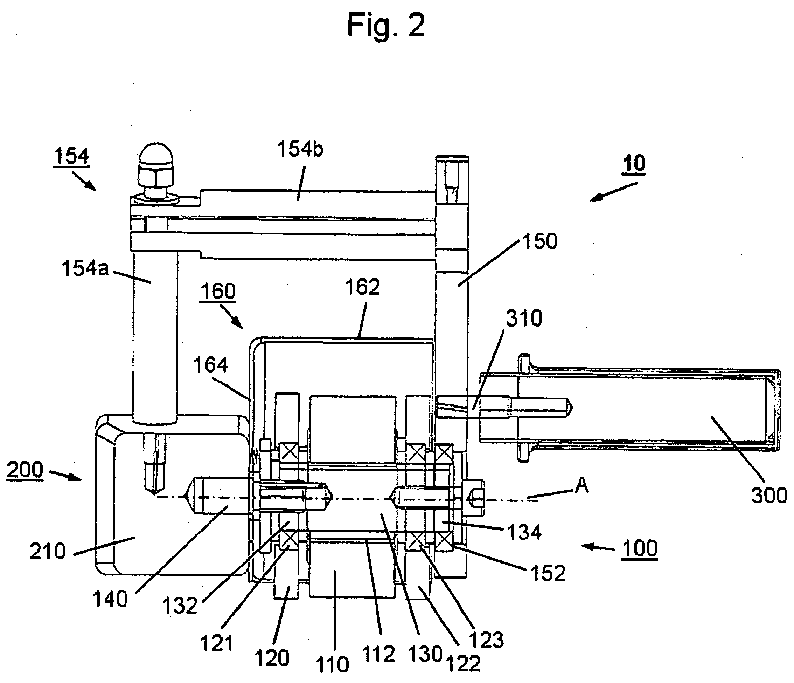

Fig. 2 zeigt eine Schnittdarstellung in einer Ebene entlang der Mittellängsachse A der Antriebswelle 130 gemäß Fig. 1.

Wie aus Fig. 2 ersichtlich wird, ist die Messerwalze 110 auf der Antriebswelle 130 angeordnet. Die Messerwalze 110 und die Antriebswelle 130 sind in bekannter Weise drehfest miteinander verbunden. Eine solche drehfeste Verbindung kann ein Schrumpfverband oder eine Nut-Feder-Verbindung sein. Links und rechts der Messerwelle 110 sind die Führungselemente 120, 122 mit Abstand zur Messerwelle 110 auf der Antriebswelle 130 koaxial zu dieser angeordnet. Die Führungselemente 120, 122 sind dabei durch Lager 121, 123 drehbar auf der Antriebswelle 130 gehalten. Die Führungselemente 120, 122 weisen Mittellängsachsen auf, die mit der Mittellängsachse A der Antriebswelle 130 zusammenfallen und zur besseren Übersichtlichkeit nicht dargestellt und daher nicht bezeichnet sind.

In den Stirnenden der Antriebswelle 130 sind koaxial zur Mittellängsachse A Gewindebohrungen eingebracht. In die im ersten oder linken Ende 132 der Antriebswelle 130 befindlichen Bohrung ist der Adapter 140 eingeschraubt. Der zylindrische Adapter 140 weist hierzu an seinem in Fig. 2 rechten Ende eine entsprechendes Außengewinde auf. An seinem linken Ende besitzt der Adapter 140 ebenfalls ein Außengewinde, mittels dem er mit dem Antrieb 200 verbindbar ist. Um dem Adapter 140 befestigen zu können befindet sich zwischen den beiden Außengewinden etwa mittig eine Schlüsselfläche zum Ansetzen eines Schraubenschlüssels.

Auf dem rechten oder zweiten Ende 134 der Antriebswelle 130 ist, mittels des Lagers 152 gegenüber der Antriebswelle 130 drehbar, das Lagerelement 150 mit seinem in Fig. 2 unteren Ende angeordnet. Wie bereits im Zusammenhang mit Fig. 1 erläutert, ist der horizontale Verbindungssteg 154b der Drehmomentabstützung 154 mit seinem rechten Ende fest mit dem oberen Ende des Lagerelements 150 verbunden, bspw. durch eine in Fig. 2 dargestellte Verschraubung. Der vertikale Bolzen 154a ist mit seinem unteren Ende mit dem Gehäuseteil 210 des Antriebs 200 verbunden und mit seinem oberen Ende an dem linken Ende des horizontalen Verbindungsstegs 154b befestigt. Die Drehmomentabstützung 150 verhindert zum Einen ein Mitdrehen des Lagerelements 150 bei laufender Antriebswelle 130. Zum Anderen kann die Drehmomentabstüzung 154 in der dargestellten Ausführung oder auch in einer weiter modifizierten Gestaltung als Halte- und Führungsgriff für das Schälgerät 10 dienen. Weiterhin ist an der vom Schälkopf 100 weg weisenden Seite des Lagerelements 150 der Griff 300 angebracht. Hierzu weist der Griff 300 an seinem dem Lagerelement 150 zugewandten Seite einen Gewindebolzen 310 auf, mittels dem der Griff 300 in eine entsprechende Gewindebohrung des Lagerelements 150 eingeschraubt ist. Der im Wesentlichen zylindrische Griff 300 ist parallel zur Mittellängsachse der Messerwalze 110 ausgerichtet.

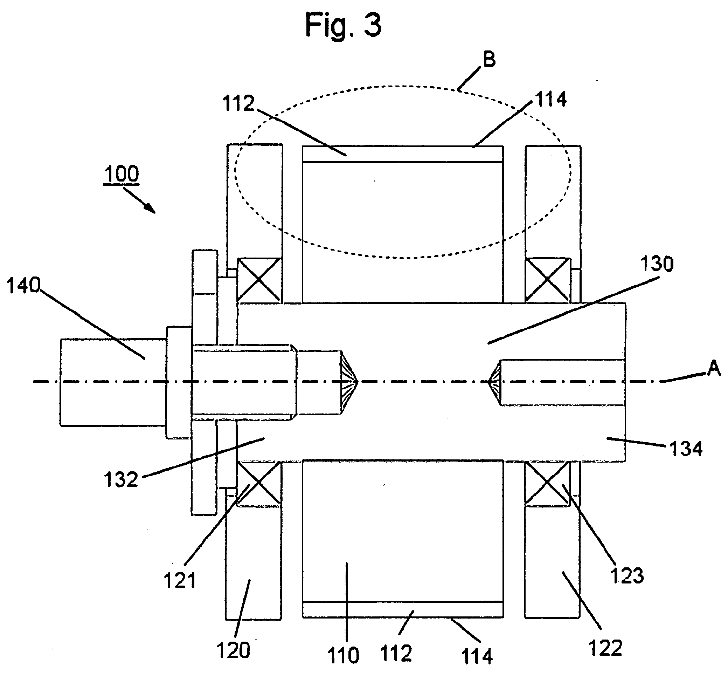

Fig. 3 zeigt eine Schnittdarstellung des Schälkopfes in der Schnittebene entsprechend Fig. 2. Zur besseren Übersichtlichkeit sind in dieser Darstellung nur die wesentlichen Elemente des Schälkopfes gezeigt. Kernstück des Schälkopfes 100 ist die zylindrische Antriebswelle 130 mit den in die Stirnseiten ihres linken und rechten Endes 132, 134 eingebrachten und koaxial zur Mittellängsachse A ausgerichteten Gewindebohrungen. Etwa mittig auf der Antriebswelle 130 ist die Messerwelle 110 angeordnet und drehfest mit der Antriebswelle 130 verbunden. Mittels der Lager 121, 123 sind die zylindrischen Führungselemente 120, 122 mit Abstand zur Messerwalze 110 drehbar auf der Antriebswelle 130 angebracht.

Die Messerwalze 110 gemäß Fig. 3 weist zwei einander gegenüberliegend angeordnete Schälklingen 112 auf, die aus der Umfangsoberfläche der zylindrischen Messerwalze 130 herausragen und an ihren äußeren Enden lineare Schneidkanten 114 besitzen. Diese Schneidkanten 114 bilden den maximalen Durchmesser des Schälkopfs 100 und sind parallel zur Mittellängsachse A der Antriebswelle 130 ausgerichtet. Der Durchmesser des Führungselements 120 entspricht diesem maximalen Durchmesser des Schälkopfes 100. Der Durchmesser des Führungselements 122 ist dagegen geringer, wie dies im Detail B deutlich wird. Die Durchmesserreduzierung des Führungselements 122 gegenüber dem Durchmesser des Führungselements 120 entspricht dabei dem Doppelten der gewünschten Schältiefe S. Mit anderen Worten, der Radiusunterschied entspricht dem zu erzielenden Materialabtrag bzw. der Schältiefe S.

Weiterhin ist in Fig. 3 der Adapter 140 dargestellt, der mit seinem rechten Ende, das ein entsprechendes Außengewinde aufweist, in die Gewindebohrung in das linke Ende 132 des Antriebswelle 130 eingeschraubt ist. Etwa mittig auf dem Adapter 140 ist ein umlaufender Bund vorgesehen, der mittels nicht näher bezeichneter Unterlegscheiben den Anschlag für das Lager 121 bildet.

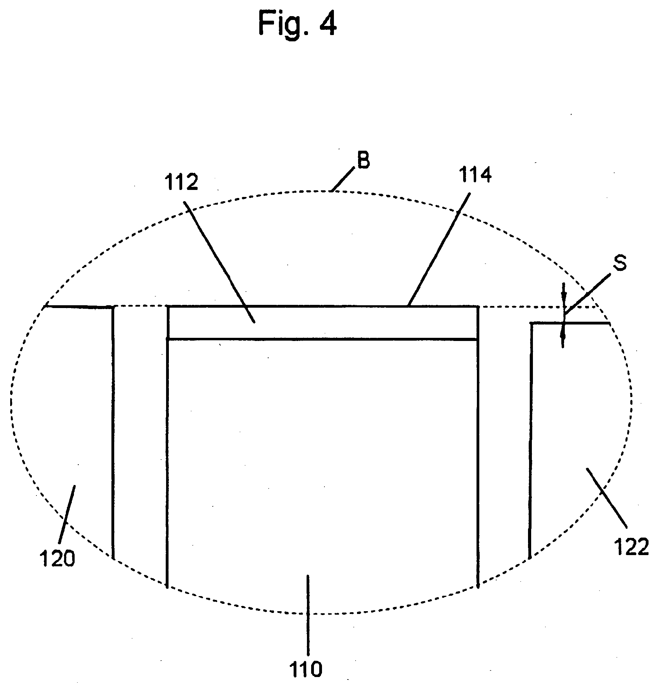

Fig. 4 zeigt das Detail B aus der Fig. 3. Der Durchmesser des linken Führungselements 120 entspricht dem durch die Schneidkante 114 der in der Messerwalze 110 angebrachten Schälklinge 112 gebildeten maximalen Durchmesser des Schälkopfes 100. Der Durchmesser des rechten Führungselements 122 ist gegenüber dem Durchmesser des linken Führungselements 120 und dem maximalen Durchmesser des Schälkopfes 100 reduziert, wodurch sich die Schältiefe S ergibt, die, wie in Fig. 4 zu sehe ist, der Radiusdifferenz entspricht.

Das Schälgerät 10 wird zur Vorbereitung eines Rohrs zum Anbringen eines Abzweigs oder dergleichen in Form eines Sattelstücks auf dem Rohr, also beabstandet von einem Rohrende verwendet. Hierzu wird von der Rohroberfläche zur Beseitigung von bspw. Kratzern und Riefen oder dem Entfernen einer eventuell vorhandenen Oxidschicht Material abgetragen.

Hierzu wird das eingeschaltete Schälgerät in radialer Richtung über die betreffende Stelle des Rohrs geführt. Dabei führt der Bediener, der das Schälgerät 10 an Antrieb 200 und Griff 300 hält, zur besseren Handhabung und Stabilität eine Zugbewegung auf sich zu aus, wobei ein Streifen, der der Breite der Messerwalze 110 bzw. der Länge der Schälklinge 112 entspricht geschält wird. Der achsparallel zur Antriebswelle 130 angeordnete Griff 300 kann dabei zur Ausrichtung des Schälgeräts 10 in axialer Richtung zum Rohr verwendet werden. Unter Schälen wird hier das oberflächliche Abtragen von Material von der Rohroberfläche verstanden. Entsprechend der Breite des zu bearbeitenden Rohrabschnitts ist es in der Regel notwendig, mehrere solcher Streifen in axialer Richtung nebeneinander zu schälen.

Beim Abschälen eines ersten radialen Streifen vom der Rohroberfläche wird, bedingt durch die Durchmesserunterschiede der Führungselemente 120, 122 zunächst ein Streifen mit etwa dreieckförmigem Querschnitt abgetragen, dessen tiefste Stelle der gewünschten Schältiefe S entspricht. Zum Abtrag eines weiteren Streifens wird nun das Schälgerät 10 so in Richtung des zu schälenden Abschnitts auf das Rohr aufgesetzt, dass das linke Führungselement 120 auf dem geschälten Abschnitt aufliegt, während das rechte Führungselement 122 auf dem noch zu schälenden Bereich abrollt. Durch die oben beschriebenen Durchmesser der Führungselemente 120, 122 und des maximalen Durchmessers des Schälkopfes 100 ist nun gewährleistet, dass die Schneidkante 114 der Schälklinge 112 parallel zur Oberfläche des Rohrs ausgerichtet ist und so ein gleichmäßiger Materialabtrag und eine ebene geschälte Fläche erzielt wird.

Auf die vorbeschriebene Weise werden weitere radial verlaufende Streifen von der Rohroberfläche geschält, bis die Fläche zum Aufbringen des Sattelstücks die gewünschte axiale Länge hat. Es versteht sich, dass die radiale Breite der zu bearbeitenden Fläche durch die radiale Bewegung des Schälgeräts 10 bestimmt wird. Die zu bearbeitende Fläche kann dabei einen schmalen radialen Bereich umfassen, aber auch vollumfänglich um das Rohr verlaufen. Auf die so bearbeitete Fläche kann anschließend das Sattelstück in geeigneter Weise aufgebracht, bspw. aufgeschweißt oder geklebt werden.

Die Schältiefe S beträgt üblicher Weise ca. 0,2 mm, sie kann aber bei Bedarf hiervon abweichen, bspw. bei Rohren mit wesentlich größerem Durchmesser oder stärkeren Beeinträchtigungen der Oberfläche. Natürlich kann eine bereits geschälte Fläche auch ein weiteres Mal geschält werden, wenn noch Kratzer vorhanden sind, die eine Undichtigkeit der Verbindungsnaht hervorrufen könnten. Dabei ist aber darauf zu achten, dass die Wandstärke des Rohrs nicht unzulässig reduziert wird.

Entsprechend Fig. 1 wird das erfindungsgemäße Schälgerät 10 von einem Elektromotor eines Winkelschleifers angetrieben, sodass der Antrieb 200 um einen Winkel von 90° gegenüber der Antriebswelle 130 verschwenkt ist. Hierdurch reduziert sich die Gesamtbreite des Schälgerätes 10, das so auch bei räumlich beengten Bedingungen gut einsetzbar ist. Selbstverständlich können über ein entsprechendes Getriebe andere Winkel als ein 90° Winkel zwischen dem Antrieb 200 und der Antriebswelle 130 realisiert werden, die z.B. eine ergonomisch weiter verbesserte Handhabung des handgeführten Schälgeräts 10 ermöglichen.

Alternativ kann auch ein anderer Antrieb, wie eine Bohrmaschine oder ein anderer Motor an das Schälgerät gekoppelt sein, der koaxial oder zumindest achsparallel zur Antriebswelle 130 ausgerichtet ist.

Es ist, z.B. bei stationärem Betrieb, ebenfalls möglich, eine Gelenkwelle mit dem Schälgerät 10 zu verbinden, die an einen stationären Antrieb gekoppelt ist.

Im vorstehend beschriebenen Ausführungsbeispiel entspricht der Durchmesser des linken Führungselements 120 dem maximalen Durchmesser des Schälkopfes 100, wogegen das rechte Führungselement 122 einen der Schältiefe S entsprechend reduzierten Durchmesser aufweist. Es ist selbstverständlich möglich, dass der Durchmesser des linken Führungselements 120 gegenüber dem der Durchmesser des rechten Führungselements 122, der dann mit dem maximalen Durchmesser des Schälkopfes 100 übereinstimmt, entsprechend reduziert ist.

In allen vorbeschriebenen Variationen wird aber durch den Einsatz der Führungselemente 120, 122 eine präzise und ruhige Führung des Schälgeräts 10 erreicht, wodurch der Materialabtrag gleichmäßig und die bearbeitete Oberfläche eben ist.

Die Drehrichtung des Schälkopfes hat keinen Einfluss auf das erzielte Ergebnis. Sie kann aber entsprechend der persönlichen Neigung des Bedieners variieren. Hierbei muss aber darauf geachtet werden, dass die Orientierung der Schälklingen 112, soweit diese notwendig ist, an die Drehrichtung des Schälkopfes 100 angepasst ist.

Wird, wie in Fig. 1 dargestellt, ein Winkelschleifer als Antrieb 200 verwendet, kann dessen Spritzschutz durch Anbringen eines separaten ersten Abschnitts 162 als Abdeckung 160 fungieren. Der vorhandene Spritzschutz kann selbstverständlich auch entfernt werden und eine komplette Abdeckung 160 mit einem ersten und einem zweiten Abschnitt 162, 164 an dessen Stelle montiert werden. Des Weiteren kann die Abdeckung in Umfangsrichtung verstellbar sein, um den Arbeitsbereich ergonomisch z.B. an unterschiedliche Bediener oder Arbeitssituationen anpassen zu können.

Als Material für die meiste Elemente des Schälkopfes 100 wird aus Gründen der Belastbarkeit ein geeignetes Metall empfohlen. Da mit dem Schälgerät 10 idR. Kunststoffrohre bearbeitet werden, genügt als Material für die Abdeckung 160 ein geeigneter Kunststoff.

Im vorstehend beschriebenen Ausführungsbeispiel ist die, den maximalen Durchmesser des Schälkopfs 100 bildende Schälklinge 112 als eine gerade Klinge mit einer linearen Schneidkante 114 dargestellt, die zumindest annähernd parallel zur Mittellängsachse A der Antriebswelle 130 ausgerichtet ist. Selbstverständlich können auch eine oder mehrere Schälklingen mit einer nichtlinearen Schneidkante vorgesehen sein, die z.B. spiralförmig, zumindest teilweise um die Messerwelle 110 herum verlaufend angeordnet sind.

Da, die Führungselemente 120, 122 keiner verschleißenden Beanspruchung unterliegen können diese auch aus einem Kunststoff gefertigt sein. Wird für die Führungselemente 120, 122 PTFE, das selbstgleitenden Eigenschaften aufweist, als Material verwendet, können die Führungselemente 120, 122 gegenüber dem Antrieb 200 oder dem Gehäuseteil 210 feststehend angeordnet sein.

Darüberhinaus kann weiterhin vorgesehen sein, die Führungselemente 120, 122 austauschbar zu gestalten, um eine Anpassung des Schälgeräts 10 an verschiedene Rohrdurchmesser und/oder Schältiefen S vornehmen zu können.

## Patentansprüche

1. Schälgerät zum zumindest teilweisen Abtragen der Außenumfangsoberfläche von rotationssymmetrischen Gegenständen, insbesondere zylindrischen Kunststoffrohren, enthaltend einen Schälkopf (100) mit einer eine Mittellängsachse (A) aufweisenden Antriebswelle (130), mit einer drehfest auf der Antriebswelle (130) und koaxial zu dieser angeordneten zylindrischen Messerwalze (110), sowie mit wenigstens einer in der Messerwalze (110) angeordneten Schälklinge (112), die eine aus der Messerwalzenoberfläche heraus ragende und den maximalen Außendurchmesser des Schälkopfes (100) bildende Schneidkante (114) aufweist, wobei
zwei zylindrische und Mittellängsachsen aufweisende Führungselemente (120, 122) vorgesehen sind, die an den Stirnseiten der Messerwalze (110) koaxial zu dieser angeordnet sind, und wobei das erste Führungselement (120) einen Durchmesser aufweist, der dem maximalen Durchmesser des Schälkopfes (100) entspricht, und das zweite Führungselement (122) einen gegenüber dem ersten Führungselement (120) reduzierten Durchmesser aufweist, **dadurch gekennzeichnet, dass** das erste und das zweite Führungselement (120, 122) von der Messerwalze unabhängig um ihre Mittellängsachse drehbar gelagert sind.

2. Schälgerät nach Anspruch 1,
**dadurch gekennzeichnet, dass** der Durchmesserunterschied zwischen dem ersten und dem zweiten Führungselement (120, 122) dem Doppelten des von der Außenumfangsoberfläche der rotationssymmetrischen Gegenstände zu erzielenden Materialabtrags oder der Schältiefe (S) entspricht

3. Schälgerät nach Anspruch 1 oder 2,
**dadurch gekennzeichnet, dass** das erste und das zweite Führungselement (120, 122) auf der Antriebswelle (130) drehbar gelagert sind.

4. Schälgerät nach einem der Ansprüche 1 bis 3,
**dadurch gekennzeichnet, dass** die Breite der Führungselemente (120, 122) geringer ist als die Breite der Messerwalze.

5. Schälgerät nach einem der Ansprüche 1 bis 4,
**dadurch gekennzeichnet, dass** die Führungselemente (120, 122) und die Messerwalze (110) aus Metall bestehen.

6. Schälgerät nach einem der Ansprüche 1 bis 5,
**dadurch gekennzeichnet, dass** eine parallel zur Messenrvalzenoberfläche ausgerichtete Abdeckung (160) vorgesehen ist, die die Messerwalze (110) und die Führungselemente (120, 122) in axialer Richtung zumindest annähernd komplett abdeckt und sich in Umfangsrichtung zumindest über einen Abschnitt erstreckt.

7. Schälgerät nach einem der Ansprüche 1 bis 6,
**dadurch gekennzeichnet, dass** die Antriebswelle (130) ein erstes Ende (132) mit einem Adapter (140) zum Anschluss eines Antriebs (200) aufweist.

8. Schälgerät nach Anspruch 7,
**dadurch gekennzeichnet, dass** der Antrieb (200) ein Elektromotor ist.

9. Schälgerät nach Anspruch 8,
**dadurch gekennzeichnet, dass** der Antrieb (200) ein Elektrogerät, wie ein Winkelschleifer oder eine Bohrmaschine ist.

10. Schälgerät nach einem der Ansprüche 1 bis 9,
**dadurch gekennzeichnet, dass** die Antriebswelle (130) ein zweites Ende (134) aufweist, an dem ein Lagerelement (150) vorgesehen ist.

11. Schälgerät nach Anspruch 10,
**dadurch gekennzeichnet, dass** das zweite Ende (134) der Antriebswelle (130) in dem Lagerelement (150) drehbar gelagert ist.

12. Schälgerät nach Anspruch 10 oder 11,
**dadurch gekennzeichnet, dass** das Lagerelement (150) eine Drehmomentabstützung (154) aufweist, mittels der das Lagerelement (150) an einem Rahmenteil des Antriebs (200) fixierbar ist.

13. Schälgerät nach einem der Ansprüche 10 bis 12,
**dadurch gekennzeichnet, dass** das Lagerelement (150) einen Haltegriff (300) aufweist.

## Claims

1. A skiving apparatus for at least partial removal of the outer circumferential surface of rotationally symmetric objects, in particular of cylindrical plastic pipes, said apparatus containing a skiving head (100) comprising a drive shaft (130) with a central longitudinal axis (A) and a cylindrical blade roller (110) mounted non-rotatingly and coaxially on the drive shaft (130), and further comprising at least one skiving blade (112) disposed in the blade roller (110) and having a cutting edge (114) projecting from the blade roller surface and defining the maximum outer diameter of the skiving head (100), wherein
two cylindrical guide members (120, 122) are provided which have central longitudinal axes and which are arranged at the end faces of the blade roller (110) and coaxially therewith, and wherein the first guide member (120) has a diameter equal to the maximum diameter of the skiving head (100), and the second guide member (122) has a diameter which is reduced in size relative to the first guide member (120), **characterised in that** the first and the second guide members (120, 122) are mounted to rotate independently of the blade roller about their central longitudinal axis.

2. The skiving apparatus according to claim 1,
**characterised in that** the difference in diameter between the first and the second guide member (120, 122) is twice the skiving depth (S) or depth of material to be removed from the outer circumferential surface of the rotationally symmetric objects.

3. The skiving apparatus according to claim 1 or 2,
**characterised in that** the first and the second guide members (120, 122) are rotatably mounted on the drive shaft (130).

4. The skiving apparatus according to any one of claims 1 to 3,
**characterised in that** the width of the guide members (120, 122) is less than the width of the blade roller.

5. The skiving apparatus according to any one of claims 1 to 4,
**characterised in that** the guide members (120, 122) and the blade roller (110) are of metal.

6. The skiving apparatus according to any one of claims 1 to 5,
**characterised in that** a cover (160) is provided which is aligned parallel to the blade roller surface and which covers the blade roller (110) and the guide members (120, 122) at least approximately completely in the axial direction and which extends over at least a section in the circumferential direction.

7. The skiving apparatus according to any one of claims 1 to 6,
**characterised in that** the drive shaft (130) has a first end (132) with an adapter (140) for connecting a drive unit (200).

8. The skiving apparatus according to claim 7,
**characterised in that** the drive unit (200) is an electric motor.

9. The skiving apparatus according to claim 8,
**characterised in that** the drive unit (200) is an electrical device such as an angle grinder or a power drill.

10. The skiving apparatus according to any one of claims 1 to 9,
**characterised in that** the drive shaft (130) has a second end (134) on which a bearing element (150) is provided.

11. The skiving apparatus according to claim 10,
**characterised in that** the second end (134) of the drive shaft (130) is rotatably mounted in the bearing element (150).

12. The skiving apparatus according to claim 10 or 11,
**characterised in that** the bearing element (150) has a torque support (154), by means of which the bearing element (150) can be fixed to a frame portion of the drive unit (200).

13. The skiving apparatus according to any one of claims 10 to 12,
**characterised in that** the bearing element (150) has a handle (300).

## Revendications

1. Appareil d'écroutage pour enlever au moins en partie la surface périphérique extérieure d'objets de révolution, notamment de tubes cylindriques en matière plastique, comportant une tête (100) d'écroutage comprenant un arbre (130) d'entraînement ayant un axe (A) longitudinal médian, comprenant un fût (110) porte-lame cylindrique, qui est solidaire en rotation de l'arbre (130) d'entraînement et qui lui est coaxial, ainsi qu'au moins une lame (112) d'écroutage qui est montée dans le fût (110) porte-lame et qui a une arête (114) tranchante dépassant de la surface du fût porte-lame et formant le diamètre extérieur maximum de la tête (100) d'écroutage, dans lequel
il est prévu deux éléments (120, 122) de guidage, qui sont cylindriques, qui ont des axes longitudinaux médians et qui sont mis sur les côtés frontaux du fût (110) porte-lame en lui étant co-axial, et le premier élément (120) de guidage a un diamètre qui correspond au diamètre maximum de la tête (100) d'écroutage et le deuxième élément (122) de guidage a un diamètre réduit par rapport à celui du premier élément (120) de guidage, **caractérisé en ce que** le premier et le deuxième éléments (120, 122) de guidage sont montés tournant autour de leur axe longitudinal médian indépendamment du fût porte-lame.

2. Appareil d'écroutage suivant la revendication 1,
**caractérisé en ce que** la différence de diamètre entre le premier et le deuxième éléments (120, 122) de guidage correspond au double de l'enlèvement de matière à obtenir de la surface périphérique extérieure des objets de révolution ou de la profondeur (S) d'écroutage.

3. Appareil d'écroutage suivant la revendication 1 ou 2,
**caractérisé en ce que** le premier et le deuxième éléments (120, 122) de guidage sont montés tournant sur l'arbre (130) d'entraînement.

4. Appareil d'écroutage suivant l'une des revendications 1 à 3,
**caractérisé en ce que** la largeur des éléments (120, 122) de guidage est plus petite que la largeur du fût porte-lame.

5. Appareil d'écroutage suivant l'une des revendications 1 à 4,
**caractérisé en ce que** les éléments (120, 122) de guidage et le fût (110) porte-lame sont en métal.

6. Appareil d'écroutage suivant l'une des revendications 1 à 5,
**caractérisé en ce qu'**il est prévu un recouvrement (160) qui est dirigé parallèlement à la surface du fût porte-lame, qui recouvre le fût (110) porte-lame et les éléments (120, 122) de guidage dans la direction axiale au moins à peu près complètement et qui s'étend dans la direction périphérique au moins sur une partie.

7. Appareil d'écroutage suivant l'une des revendications 1 à 6,
**caractérisé en ce que** l'arbre (130) d'entraînement a un premier bout (132) ayant un adaptateur (140) de raccordement d'un entraînement (200).

8. Appareil d'écroutage suivant la revendication 7,
**caractérisé en ce que** l'entraînement (200) est un moteur électrique.

9. Appareil d'écroutage suivant la revendication 8,
**caractérisé en ce que** l'entraînement (200) est un appareil électrique, comme une meuleuse d'angle ou une perceuse.

10. Appareil d'écroutage suivant l'une des revendications 1 à 9,
**caractérisé en ce que** l'arbre (130) d'entraînement a un deuxième bout (134) où est prévu un élément (150) de palier.

11. Appareil d'écroutage suivant la revendication 10,
**caractérisé en ce que** le deuxième bout (134) de l'arbre (130) d'entraînement est monté tournant dans l'élément (150) de palier.

12. Appareil d'écroutage suivant la revendication 10 ou 11,
**caractérisé en ce que** l'élément (150) de palier a un appui (154) de couple, au moyen duquel l'élément (150) de palier peut être assujetti à une partie de bâti de l'entraînement (200).

13. Appareil d'écroutage suivant la revendication 10 à 12, ,
**caractérisé en ce que** l'élément (150) de palier a une poignée (300) de maintien.
